# EUROPÄISCHE PATENTSCHRIFT

(11) **EP 3 378 803 B1**
(45) Veröffentlichungstag und Bekanntmachung des Hinweises auf die Patenterteilung: **28.08.2024**
(21) Anmeldenummer: 18156311.5
(22) Anmeldetag: 12.02.2018
(51) Int. Cl.: B65G 47/08, B65G 21/10

(54) **VORRICHTUNG UND VERFAHREN ZUM UMGANG MIT IN MINDESTENS EINER REIHE HINTEREINANDER BEWEGTEN STÜCKGÜTERN**
DEVICE AND METHOD FOR HANDLING PIECE GOODS MOVED ONE BEHIND THE OTHER IN AT LEAST ONE ROW
DISPOSITIF ET PROCÉDÉ DE MANIPULATION D'AU MOINS UNE RANGÉE DE MARCHANDISES EN MOUVEMENT LES UNES DERRIÈRE LES AUTRES

(30) Priorität: 24.03.2017 DE 102017204996
(43) Veröffentlichungstag der Anmeldung: 26.09.2018
(73) Patentinhaber: Krones Aktiengesellschaft, 93073 Neutraubling (DE)
(72) Erfinder: BEER, Erhard, 93073 Neutraubling (DE); KOLLMUSS, Manuel, 93073 Neutraubling (DE)
(74) Vertreter: Benninger, Johannes

(56) Entgegenhaltungen:
- EP-A1- 2 208 695
- EP-A1- 2 662 319
- EP-A2- 2 246 277
- DE-A1- 102011 080 812
- US-A- 6 126 383

## Beschreibung

Die vorliegende Erfindung betrifft eine Vorrichtung und ein Verfahren zum Umgang mit in mindestens einer Reihe hintereinander bewegten Stückgütern gemäß den Merkmalen der unabhängigen Ansprüche 1 bzw. 8.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Das Dokument EP 2 662 319 A1 offenbart eine Vorrichtung zum Umgang mit in mindestens einer Reihe hintereinander bewegten Stückgütern nach dem Oberbegriff des Anspruchs 1.

Ein vorrangiges Ziel der Erfindung besteht darin, eine exakte und positionsgenaue Verarbeitung und Handhabung von Stückgütern zu ermöglichen, die in mindestens einer Reihe befördert bzw. transportiert werden. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einer Vorrichtung und einem Verfahren zum Umgang mit in mindestens einer Reihe hintereinander bewegten Stückgütern erreicht, welche die Merkmale der unabhängigen Patentansprüche 1 und 8 umfassen. Merkmale vorteilhafter Weiterbildungen der Erfindung ergeben sich aus den jeweiligen abhängigen Ansprüchen.

Die Erfindung bezieht sich auf eine Vorrichtung bzw. Handhabungsvorrichtung und ein Verfahren zum Umgang mit in mindestens einer Reihe hintereinander bewegten Stückgütern. Wenn im Zusammenhang der vorliegenden Beschreibung nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn zudem im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die Stückgüter werden auf einer Transporteinrichtung in einer Reihe ohne Abstände als geschlossene Formation zu dem Manipulationsbereich bzw. Erfassungsbereich befördert. Mit dem Begriff der geschlossenen Formation ist eine lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos-Formation transportiert werden, die keine Unterbrechung aufweist und eine beliebige Anzahl von Stückgütern umfasst. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Wenn im Zusammenhang der vorliegenden Erfindung von einer klemmenden Erfassung von Stückgütern durch den Manipulator die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können. Beim Verschieben der Stückgüter kann dies in Flucht zur den nachfolgenden Stückgütern erfolgen. Insbesondere wird den erfassten Stückgütern hierbei durch den Manipulator nur eine Geschwindigkeitskomponente in Transportrichtung aufgeprägt. Beim Verschieben mit seitlichem Versatz gegenüber den nachfolgenden Stückgütern wird den erfassten Stückgütern dagegen noch eine zusätzliche Richtungskomponente aufgeprägt.

Vorzugsweise ist vorgesehen, dass zu dem Zeitpunkt des Erfassens mindestens eines Stückgutes zwischen diesem und den direkt nachfolgenden Stückgütern der Formation kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der Transporteinrichtung für die in Reihe hintereinander bewegten Stückgütern erreicht werden. Insbesondere kann vorgesehen sein, dass die Oberfläche der Transporteinrichtung gummiert ist, um ein Verrutschen der Stückgüter auf der Transporteinrichtung zu verhindern bzw. um den Staudruck der ständig nachgeförderten Formation bzw. Stückgutreihe abzubauen bzw. zumindest signifikant zu reduzieren.

Bei dem Erfassen des mindestens einen Stückgutes aus der Formation wird dieses in seiner Bewegung in Transportrichtung der Stückgutreihe normalerweise nicht abgebremst. Stattdessen erhält das mindestens eine Stückgut nach dem Erfassen durch den Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter in der Formation sein darf und die Richtungskomponente nicht entgegen der Transportrichtung der Stückgüter in der Formation gerichtet sein darf. Ansonsten bestünde eine Kollisionsgefahr zwischen dem erfassten Stückgut und dem nachfolgenden, nunmehr zuvorderst befindlichen Stückgut der geschlossenen Formation.

Die im Zusammenhang mit der Erfindung beschriebene Vorrichtung bzw. Handhabungsvorrichtung, die dem Umgang mit in mindestens einer Reihe von hintereinander bewegten Stückgütern dient, umfasst wenigstens eine erste Transporteinrichtung und mindestens einen Manipulator. Die wenigstens eine erste Transporteinrichtung dient der Zuführung der in einer Reihe unmittelbar aufeinanderfolgenden ohne Beabstandung als geschlossene Formation angeordneten bzw. bewegten Stückgüter zu einem Erfassungsbereich des mindestens einen Manipulators.

Der mindestens eine Manipulator ist zum klemmenden und/oder formschlüssigen und/oder kraftschlüssigen Erfassen und/oder Entgegennehmen mindestens eines Stückgutes der über die erste Transporteinrichtung zugeführten Formation innerhalb eines Erfassungsbereiches des Manipulators sowie zum Abtrennen und Überführen des mindestens einen Stückgutes der Formation in eine Zielposition innerhalb seines Erfassungsbereiches ausgebildet. Mit dem mindestens einen Manipulator können bevorzugt eine Mehrzahl an hintereinander bewegten Stückgütern als palettierfähigen Lage oder Teillage zusammengestellt werden. Alternativ und/oder zusätzlich kann der mindestens eine Manipulator des Gruppiermoduls auch als Dreh- und Verteilsystem für Stückgüter verwendet werden, ohne dabei eine definierte relative Anordnung der Stückgüter zur Vorbereitung einer palettierfähigen Lage oder Teillage herzustellen. Die derart gedrehten und/oder verteilten Stückgüter werden anschließend über geeignete Fördersysteme o.ä. einer weiteren Verarbeitung zugeführt.

Wenn in diesem Zusammenhang oder auch im Zusammenhang der gesamten Beschreibung von Vorgruppierungen, von einer palettierfähigen Lage oder von einer palettierfähigen Lagenanordnung die Rede ist, so sind damit generell alle Stückgut-Zusammenstellungen innerhalb einer horizontalen Ebene - ggf. auch in zwei oder drei Ebenen übereinander gestapelt - gemeint, die in Richtung von nachgeordneten Handhabungs- und/oder Palettierungs- und/oder Verpackungsstationen weitertransportiert werden können. Generell ist bei den erfindungsgemäßen Verfahren davon auszugehen, dass zunächst ein hoher Ordnungsgrad der Stückgüter vorliegt, da diese in geschlossenen Formationen als Reihe bzw. Reihen zum Manipulator oder zu den Manipulatoren befördert werden. Dort wird diese Ordnung zunächst weitgehend aufgelöst, da die Stückgüter an unterschiedliche Positionen gebracht werden, wodurch jedoch der Ordnungsgrad der Stückgüter untereinander in Transportrichtung allmählich wieder zunimmt. Im weiteren, hier nicht mehr detailliert erläuterten Transportverlauf, kann der Ordnungsgrad nochmals deutlich stärker zunehmen, indem Abstände der Lagenanordnungen oder Vorgruppierungen durch deren Aneinanderfügen und/oder Zusammenschieben aufgehoben und die Lagenanordnungen als weitgehend geschlossene Lagen wahlweise zusammengefasst werden, bspw. durch geeignete Umverpackungen. Wahlweise jedoch können die zusammengestellten Stückgüter auch in der jeweiligen Lagenanordnung gestapelt und/oder palettiert und erst anschließend mit Umverpackungen umhüllt bzw. ausgestattet werden. Außerdem sei darauf hingewiesen, dass der Begriff der palettierfähigen Lage bzw. der palettierfähigen Lagenanordnung immer auch die Teillage bzw. Teillagenanordnung umfasst und umgekehrt.

Bei der erfindungsgemäßen Vorrichtung ist vorgesehen, dass die mindestens eine erste Transporteinrichtung, die nachfolgend nur noch mit dem allgemeinen Begriff der Transporteinrichtung bezeichnet wird, in ihrer Position relativ zum Erfassungsbereich des Manipulators in einer Richtung mit einer Querkomponente zur Transportrichtung der Stückgüter auf der Transporteinrichtung veränderlich ist. Erfindungsgemäß kann die mindestens eine Transporteinrichtung über ein geeignetes quer zur Transportrichtung angeordnetes Schienensystem oder einen anderen geeigneten Mechanismus, beispielsweise vermittels einer Spindelverstellung o.ä., quer zur Transportrichtung verschoben werden. Ob die Transporteinrichtung hierbei mehrgliedrig aufgebaut ist, so dass der letzte Abschnitt, der in den Erfassungsbereich des Manipulators mündet, annähernd senkrecht auf den Erfassungsbereich trifft, oder ob auch ein leicht schräges Auftreffen zugelassen werden soll, richtet sich nach den baulichen Gegebenheiten sowie auch nach den Möglichkeiten des Manipulators bzw. dessen Steuerung, auf leicht schräg in den Erfassungsbereich eintretende Stückgüter zu reagieren, d.h., diese Winkelabweichungen in der Transportrichtung durch entsprechende Steuerungsvorgaben ausgleichen und die Stückgüter sicher greifen zu können. Ein mehrgliedriger Aufbau der Transporteinrichtung würde bspw. zwei oder mehr Knickstellen aufweisen, wobei bspw. ein an den Erfassungsbereich anschließender Abschnitt parallel verschiebbar sein könnte, während ein vorgeordneter Abschnitt über eine gelenkige Verbindung eine Winkelabweichung zulassen könnte. Die vorzugsweise motorische Verstellung der Transporteinrichtung bzw. deren Abschnitte könnte vorzugsweise mit der Bewegungssteuerung des Manipulators oder der Manipulatoren gekoppelt sein, wodurch diese jeweils die Stückgüter exakt an der richtigen Stelle greifen, auch wenn die Transporteinrichtung zuvor an eine andere Übergabestelle zum Erfassungsbereich positioniert und/oder wenn sie im laufenden Positionierungsbetrieb verschoben wird.

Vorzugsweise werden die Stückgüter in mehreren parallelen Reihen jeweils als geschlossene Formation über zwei oder mehr parallel angeordnete Transporteinrichtungen zum Erfassungsbereich des mindestens einen Manipulators zugeführt, wobei mindestens eine der zwei oder mehr parallelen Transporteinrichtungen in ihrer Position relativ zum Erfassungsbereich und/oder in ihrer Position relativ zu der mindestens einen zweiten Transporteinrichtung und/oder weiterer Transporteinrichtungen veränderlich ist. Insbesondere kann die Position der mindestens einen Transporteinrichtung quer zur Transportrichtung der Stückgüter verändert und eingestellt werden. Dadurch kann insbesondere der Abstand zwischen der mindestens einen ersten Transporteinrichtung und der mindestens einen zweiten Transporteinrichtung und/oder weiterer Transporteinrichtungen verändert werden. Dies ist insbesondere vorteilhaft bei mindestens drei zuführenden Transporteinrichtungen, da durch eine entsprechende Verstellung mindestens einer Transporteinrichtung Platz geschaffen wird, damit der Manipulator problemlos Stückgüter von der Formation auf der mittig angeordneten Transporteinrichtung abgreifen kann. Werden die Stückgüter über drei oder mehr parallelen Transporteinrichtungen zugeführt, dann ist vorzugsweise vorgesehen, dass mindesten zwei der Transporteinrichtungen in ihren Abständen zueinander variabel eingestellt werden können

Die Verstellung der mindestens einen Transportrichtung kann im laufenden Produktionsbetrieb erfolgen oder aber vorbereitend für einen Positionierungs- und/oder Lagenbildungsbetrieb jeweils vor einem Produktionsstart und/oder bei einem Produktwechsel. Eine Verstellung im laufenden Produktionsbetrieb kann vorteilhaft eingesetzt werden, um das als nächstes in den Erfassungsbereich einlaufende Stückgut in einer Position anzuordnen, so dass der Manipulator das mindestens eine erfasste Stückgut nur fluchtend zu den nachfolgenden Stückgütern in Transportrichtung verschieben muss und nicht noch eine zusätzliche Bewegungskomponente notwendig ist, um das mindestens eine Stückgut seitlich versetzt zu den nachfolgenden Stückgütern anordnen zu müssen. Alternativ kann vorgesehen sein, dass die Positionierung der mindestens einen Transporteinrichtung relativ zu dem Erfassungsbereich des mindestens einen Manipulators nur einmal zu Beginn eines neuen Produktionszyklus entsprechend dem herzustellenden Lagenschema bestimmt und eingestellt wird und im laufenden Produktionsbetrieb in der eingestellten Position verbleibt.

Der mindestens eine Manipulator der erfindungsgemäßen Vorrichtung ist vorzugsweise oberhalb einer horizontalen Transportebene angeordnet, die beispielsweise durch eine zweite Transporteinrichtung, welche nachfolgend als Horizontalfördereinrichtung bezeichnet wird, gebildet wird. Die mindestens eine Horizontalfördereinrichtung ist hierbei in einer Flucht zu der mindestens einen ersten Transporteinrichtung angeordnet. Der Manipulator und die Horizontalfördereinrichtung bilden dabei ein Gruppiermodul, in dem die über die mindestens eine Transporteinrichtung in geschlossener Formation zugeführten Stückgüter gemäß einem gewünschten Lagenschema angeordnet und/oder ausgerichtet werden. Der wenigstens eine Manipulator kann innerhalb des Gruppiermoduls beweglich angeordnet sein, um den Erfassungsbereich des Manipulators zu vergrößern. Hierzu kann vorgesehen sein, dass der wenigstens eine Manipulator zumindest innerhalb einer insbesondere horizontalen Ebene bewegbar und/oder verschiebbar ist, die vorzugsweise parallel zur Transportebene der Stückgüter angeordnet ist. Besonders bevorzugt kann der mindestens eine Manipulator innerhalb dieser horizontalen Ebene mit einer Querkomponente zur Transportrichtung verstellt werden. Weiterhin kann vorgesehen sein, dass der wenigsten eine Manipulator vertikal verstellbar ist und somit in unterschiedlichen Höhen über der Transportebene angeordnet werden kann. Um die Flexibilität der Verarbeitung von Stückgütern innerhalb des Gruppiermoduls weiterhin zu erhöhen kann alternativ oder zusätzlich vorgesehen sein, dass der wenigsten eine Manipulator innerhalb des Gruppiermoduls zumindest um eine in etwa vertikal zur Transportebene der Stückgüter stehende, insbesondere vertikale Drehachse bewegt und/oder verdreht werden kann.

Gemäß einer Ausführungsform der Erfindung kann ein Verschieben der Stückgüter durch den Manipulator in Flucht zu den nachfolgenden Stückgütern der jeweiligen Reihe bzw. Formation erfolgen. Insbesondere wird den erfassten Stückgütern hierbei durch den Manipulator nur eine Geschwindigkeitskomponente in Transportrichtung aufgeprägt. Beim Verschieben mit seitlichem Versatz gegenüber den nachfolgenden Stückgütern wird den erfassten Stückgütern dagegen noch eine zusätzliche Richtungskomponente aufgeprägt. Zusätzlich kann eine der Manipulator eine Drehung des mindestens einen erfassten Stückgutes bewirken, vorzugsweise eine Drehung um 90°, 180°, 270° oder 360°.

Weiterhin kann vorgesehen sein, dass Stückgüter bahnübergreifend abgegriffen werden können. Hierzu werden zwei benachbarte Transporteinrichtungen vorzugsweise direkt aneinandergrenzend angeordnet, so dass die Stückgüter der einen Reihe keinen oder nur einen geringen Abstand zu den auf der benachbarten Transporteinrichtung angeordneten Stückgütern der Nachbarreihe aufweisen und durch den Manipulator entsprechend mindestens zwei Stückgüter von mindestens zwei benachbarten Transporteinrichtungen gemeinsam erfasst, von den nachfolgenden Stückgütern abgetrennt und in eine Zielposition und/oder -ausrichtung auf der Horizontalfördereinrichtung des Gruppiermoduls verbracht werden können.

Der Manipulator kann beispielsweise als Parallelkinematik- Roboter ausgebildet oder Teil eines solchen sein, insbesondere kann der Manipulator als Tripod oder Portalroboter, Mehrachsroboter etc. ausgebildet sein, mit einer innerhalb des Erfassungsbereiches beweglichen und drehbaren Greifeinrichtung zur Erfassung und Positionierung von jeweils einem Stückgut oder zur gleichzeitigen Erfassung und Positionierung von zwei oder mehr Stückgütern.

Gemäß einer Ausführungsform können dem mindestens einen Manipulator wenigstens zwei gegenüberliegend, insbesondere paarweise gegenüberliegend angeordnete Klemm- und/oder Greifelemente zugeordnet sein, welche zum klemmenden und/oder kraft- und/oder formschlüssigen Erfassen sowie zum Abtrennen und Überführen des jeweiligen mindestens einen Stückgutes bzw. der mehreren erfassten Stückgüter in die Zielposition und/oder Zielausrichtung miteinander, insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Wenn im vorliegenden Zusammenhang von gegenüberliegend angeordneten Klemm- und/oder Greifelementen die Rede ist, so können damit insbesondere gegeneinander zustellbare Klemmbacken eines Greifkopfes o. dgl. gemeint sein, die das Stückgut an dessen Längsseiten erfassen. Es sind jedoch auch zahlreiche andere Greif- und/oder Erfassungsprinzipien sinnvoll, ggf. auch kombinierte. So kann wahlweise auch ein Unterdruckgreifer zur Unterstützung zum Einsatz kommen, der bspw. mit beweglichen mechanischen Greifelementen kombiniert sein kann. Grundsätzlich umfasst der Begriff des Manipulators bzw. der Begriff der Klemm- und/oder Greifelemente jegliche Erfassungs- und/oder Manipulationselemente, die zur beschriebenen Wechselwirkung mit den Stückgütern geeignet sein können und entsprechend ausgestattet sind.

Bei der Vorrichtung bzw. Handhabungsvorrichtung zum Umgang mit in mindestens einer Reihe hintereinander bewegten Stückgütern ist zudem vorgesehen, dass mindestens eines von zwei gegenüberliegend angeordneten Klemm- und/oder Greifelementen des mindestens einen Manipulators zum kraft- und/oder formschlüssigen Erfassen des mindestens einen Stückgutes ausgebildet ist. Da zudem in der vorliegenden Beschreibung neben der formschlüssigen Erfassung der Stückgüter auch oftmals von einer klemmenden Erfassung der Stückgüter die Rede ist, sei an dieser Stelle erwähnt, dass damit auch eine kraftschlüssige Erfassung mitumfasst sein soll, da bei den einzelnen Greifvorgängen in aller Regel nicht exakt bestimmbar und insbesondere nicht exakt voneinander abgrenzbar ist, wie die eigentliche Kraftübertragung von den Greifelementen auf die Stückgüter, die Gebinde etc. erfolgt. Eine formschlüssige Erfassung bei gleichzeitiger leichter Klemmung enthält in aller Regel auch einen zumindest leichten Kraftschluss.

Alternativ kann eine weitere Ausführungsvariante der Vorrichtung und des Verfahrens vorsehen, dass die in mindestens einer Reihe, vorzugsweise in mehreren Reihen, jeweils ohne Abstände oder mit minimalen Abständen unmittelbar aufeinanderfolgende Stückgüter als geschlossene Formationen transportiert werden, wobei die Stückgüter bzw. einzelne oder mehrere Stückgüter aus der mindestens einen geschlossenen Formation über mindesten zwei im Gruppiermodul angeordnete Manipulatoren klemmend und/oder formschlüssig und/oder kraftschlüssig erfasst, von der geschlossenen Formation jeweils räumlich abgetrennt und von den mehreren Manipulatoren hierbei zeitlich überlagert in eine jeweilige definierte relative Zielposition und/oder Zielausrichtung gegenüber nachfolgenden Stückgütern gebracht werden. Beispielsweise kann vorgesehen sein, dass die Stückgüter in einer Reihe ankommen und in den jeweiligen Erfassungsbereich von mindestens zwei oder mehr nebeneinander und/oder parallel nebeneinander angeordneten Manipulatoren übertreten, die beide jeweils auf die Stückgüter der einen Reihe zugreifen und diese in die jeweiligen Zielpositionen und/oder -ausrichtungen verbringen. Hierbei kann insbesondere vorgesehen sein, dass die mindestens zwei Manipulatoren dieselben Erfassungsbereiche aufweisen. Alternativ kann vorgesehen sein, dass die Stückgüter in mindestens zwei Reihen in jeweiligen geschlossenen Formationen zu den mehreren Manipulatoren transportiert werden. Außerdem kann eine Variante dieses Verfahrens vorsehen, dass mittels der zwei oder mehr Manipulatoren jeweils wenigstens ein zuvorderst transportiertes Stückgut aus der jeweiligen geschlossenen Formation klemmend und/oder form- bzw. kraftschlüssig erfasst, von der jeweiligen geschlossenen Formation räumlich abgetrennt und in die jeweilige definierte relative Zielposition und/oder Zielausrichtung gegenüber jeweils nachfolgenden Stückgütern gebracht wird. Mittels eines Einsatzes von zwei oder mehr Manipulatoren können höhere Verarbeitungs- und/oder Positionierungsgeschwindigkeiten und damit kürzere Taktzeiten realisiert werden. Insbesondere bei zwei oder mehr vorzugsweise parallelen Reihen bzw. geschlossenen Formationen können zwei oder mehr Manipulatoren diese vorzugsweise parallelen Reihen bzw. geschlossenen Formationen schneller verarbeiten, so dass deutlich höhere Transportgeschwindigkeiten realisierbar sind als bei einem Einsatz nur eines Manipulators.

Diese zwei oder mehr in Transportrichtung der Stückgüter nebeneinander oder parallel angeordnete Manipulatoren können ggf. phasenweise mit überschneidenden bzw. zumindest teilweise ineinandergreifenden Bewegungsräumen und/oder Erfassungsbereichen für die Stückgüter arbeiten, wobei die Steuervorschriften für die Bewegungssteuerungen der Manipulatoren Maßnahmen zur Kollisionsvermeidung enthalten sollten. Solche sich überschneidenden Arbeits- oder Erfassungsbereiche sind insbesondere bei Gruppierungen oder Lagenbildungen aus den Stückgütern sinnvoll, die aus mehreren Reihen eine Gesamtanordnung bzw. ein gemeinsames Lagenbild zur nachfolgenden Verpackung, Palettierung etc. bilden. Da insbesondere die mittleren Bereiche eines solchen Lagenbildes eine exakte Vorhersage und Zuordnung einer Position zum Bewegungsraum eines von zwei benachbarten Manipulatoren erschweren, da diese mittleren Positionen von beiden benachbarten Manipulatoren gleichermaßen erreicht werden können, sind zumindest temporär zeitliche Überschneidungen der Bewegungsräume für die Stellbewegungen der Manipulatoren sinnvoll. Wichtig ist hierbei, dass das Bewegungsmuster der Manipulatoren derart aufeinander abgestimmt ist, dass es bei Erfassen und Positionieren der Stückgüter nicht zu einer Kollision der Manipulatoren kommt.

Gemäß einer Ausführungsform ist vorgesehen, dass jeder der wenigstens zwei Manipulatoren mindestens einer von zwei oder mehr parallelen Reihen räumlich zugeordnet und/oder innerhalb dieser räumlichen Zuordnung beweglich angeordnet ist. Vorteilhafterweise können die Erfassungsbereiche der mehreren Manipulatoren zumindest bereichsweise senkrecht zu den Transportrichtungen der mehreren zueinander benachbarten Transporteinrichtungen ausgebildet sein, was jedoch keinesfalls zwingend der Fall sein muss. Die Ausrichtungen können auch andere Winkel aufweisen oder prinzipiell unbestimmt bzw. variabel sein.

Außerdem kann bei einer weiteren Ausführungsvariante der erfindungsgemäßen Vorrichtung vorgesehen sein, dass sich Erfassungsbereiche der mehreren Manipulatoren bereichsweise überschneiden, wobei mittels mindestens einer der mehreren Transporteinrichtungen unmittelbar aufeinanderfolgende Stückgüter der jeweiligen Reihe annähernd ohne Beabstandung als geschlossene Formation in den sich überschneidenden Bereich der mehreren Manipulatoren transportierbar sind.

Insbesondere kann wenigstens einer der wenigstens zwei Manipulatoren innerhalb des Gruppiermoduls beweglich angeordnet sein, um jeweils den Erfassungsbereich der einzelnen Manipulatoren zu erhöhen und/oder Kollisionen zwischen den mindestens zwei Manipulatoren zu vermeiden. Beispielsweise kann es bei einer mindestens dreibahnigen Zuführung von Stückgütern und zwei innerhalb des Gruppiermoduls angeordneten Manipulatoren notwendig sein, zum Abgreifen von Stückgütern einer mittigen Transporteinrichtung die Anordnung der Manipulatoren innerhalb des Gruppiermoduls insbesondere quer zur Transportrichtung anzupassen und entsprechend dem gewünschten Lagenschema einzustellen, wie es oben bereits für einen Manipulator beschrieben worden ist.

Die Erfindung kann gemäß einer alternativen Ausführungsform auch auf Vorrichtungen anwendbar sein, bei denen Stückgüter in mindestens zwei Reihen zwei oder Gruppiermodulen zugeführt werden, wobei in jedem Gruppiermodul jeweils mindestens ein Manipulator angeordnet ist. Durch die Manipulatoren der mindestens zwei Gruppiermodule werden jeweils Stückgüter in einer Teillage zusammen gestellt, die anschließend in einem weiteren Transportabschnitt zu einer Gesamtlage zusammengefügt werden, beispielsweise indem zwei Teillagen zusammengeschoben werden. Dies kann beispielsweise vermittels von Schiebeelementen erfolgen, die jeweils parallel zur Transportrichtung der Horizontalfördereinrichtungen der Gruppiermodule ausgerichtet sind und quer zur Transportrichtung aufeinander zu bewegt werden können, um die Teillagen entsprechend zusammen zu führen.

Ein besonderer Vorteil des Verfahrens und der Vorrichtung besteht darin, dass der Manipulator eine Gruppierung und/oder Ausrichtung von mindestens einem Stückgut aus einer Formation von lückenlos und kontinuierlich zugeführten Stückgütern in einem einzigen Manipulationsschritt durchführen kann. Es kann somit auf herkömmlicherweise bekannte Vorrichtungen verzichtet werden, bei denen erst Stückgütergruppen von einem Zulauf abgetrennt und/oder distanziert und anschließend gedreht und/oder seitlich verschoben und/oder in definierten Zielpositionen angeordnet werden, wobei die Abtrennung einzelner Stückgüter oder Stückgut- Gruppen aus der abkommenden Formation durch den Manipulator selbst oder auch durch separate Vorgruppierungselemente erfolgen kann.

Damit unterscheidet sich die vorliegende Erfindung von aus dem Stand der Technik bekannten Portalroboter- Systemen, die ebenfalls palettierfähige Lagenbilder herstellen können. Bei diesen bekannten Palettierungsvarianten, die insbesondere mit Portalrobotersystemen arbeiten, erfolgt eine Vorgruppierung in der Regel, bevor die Stückgüter den Erfassungsbereich des Portalsystems erreichen, da solche Portalrobotersysteme eine lückenlose Anlieferung von Stückgütern/Gebinden aus Gründen der Begrenzung der maximalen Arbeitsgeschwindigkeit des Portalsystems normalerweise nicht sinnvoll verarbeiten. Demgegenüber hat die vorliegende Erfindung den besonderen Vorteil, dass sie die Vorgruppierung und die Positionierung für die Lagenbildung in einem integrierten (übergangslos) einzigen Positionierungsschritt schafft, was einen nicht unwesentlichen Teil des angestrebten Zeitgewinns gegenüber den aus dem Stand der Technik bekannten Varianten ausmacht.

Mit dem erfindungsgemäßen Verfahren und der erfindungsgemäßen Vorrichtung können somit Betriebskosten im laufenden Verpackungs- und/oder Palettierungsbetrieb sowie auch Systemkosten eingespart werden, da weniger Antriebe im Stückgut- Zulauf benötigt werden. Zudem kann die Leistung und somit der Durchsatz gegenüber den herkömmlich bekannten Systemen deutlich erhöht werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer ersten Ausführungsform einer erfindungsgemäßen Handhabungsvorrichtung in einer ersten Arbeitsanordnung.
Fig. 2 zeigt eine schematische Ansicht der ersten Ausführungsform der Handhabungsvorrichtung gemäß Fig. 1 in einer zweiten Arbeitsanordnung.
Fig. 3 zeigt eine schematische Ansicht einer zweiten Ausführungsform der erfindungsgemäßen Handhabungsvorrichtung in einer ersten Arbeitsanordnung.
Fig. 4 zeigt eine schematische Ansicht der zweiten Ausführungsform der Handhabungsvorrichtung gemäß Fig. 3 in einer zweiten Arbeitsanordnung.
Fig. 5 zeigt eine schematische Ansicht einer dritten Ausführungsform der erfindungsgemäßen Handhabungsvorrichtung in einer ersten Arbeitsanordnung.
Fig. 6 zeigt eine schematische Ansicht der dritten Ausführungsform der Handhabungsvorrichtung gemäß Fig. 5 in einer zweiten Arbeitsanordnung.
Figuren 7 bis 9 zeigen schematische Ansichten einer vierten Ausführungsform einer Handhabungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

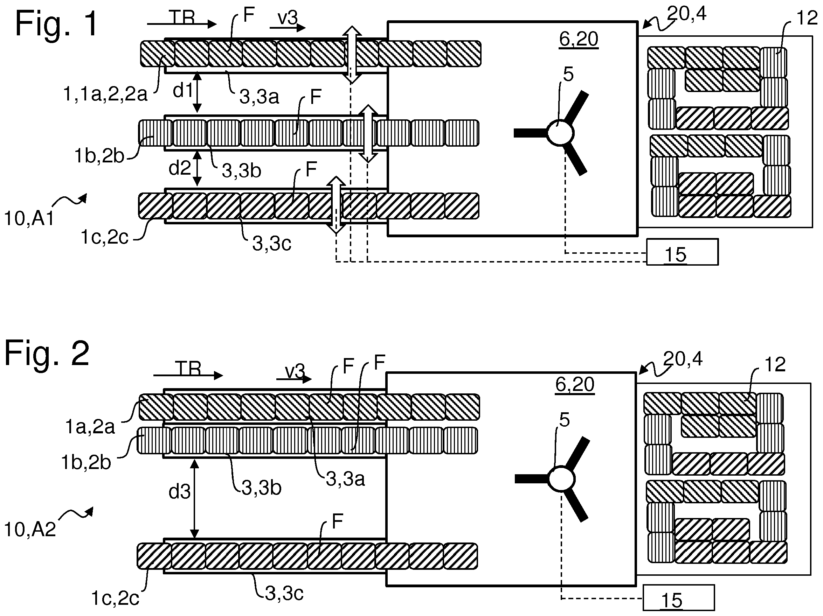

Die schematische Draufsicht der Fig. 1 zeigt eine erste Ausführungsform und denkbare Konfiguration einer erfindungsgemäßen Handhabungsvorrichtung 10 in einer ersten Arbeitsanordnung A1; die schematische Draufsicht der Fig. 2 zeigt dieselbe erste Ausführungsform der Handhabungsvorrichtung 10 in einer zweiten Arbeitsanordnung A2.

Die gezeigte Handhabungsvorrichtung 10 umfasst drei parallele Transporteinrichtungen 3, 3a, 3b, 3c, über welche unmittelbar aufeinanderfolgende Stückgüter 2 unterbrechungsfrei und/oder mit kontinuierlicher Transportgeschwindigkeit v3 in einen Erfassungsbereich 4 eines Manipulators 5 des Gruppiermoduls 20 der Handhabungsvorrichtung 10 transportiert werden. Die Stückgüter 2 werden hierbei insbesondere jeweils als geschlossene Formation F transportiert, d.h. zwischen den aufeinanderfolgenden Stückgütern 2 einer Reihe 1 sind keine oder nur geringe Abstände ausgebildet. Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann größer sein als es die Außengrenzen der Horizontalfördereinrichtung 6 vorgeben, auf deren ungefähr horizontalen Oberseite die Stückgüter 2, 2a, 2b, 2c innerhalb des Gruppiermoduls 20 befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2, 2a, 2b, 2c befinden können und/oder in dem die abzusetzenden Stückgüter 2, 2a, 2b, 2c positioniert werden können.

Alternativ kann vorgesehen sein, dass zwischen einzelnen Stückgütern 2, 2a, 2b, 2c innerhalb einer Reihe 1, 1a, 1b, 1c bzw. zwischen Gruppen aus zwei oder drei direkt in Reihe 1, 1a, 1b, 1c aneinandergrenzend angeordneten Stückgütern 2, 2a, 2b, 2c vor dem Abgreifen durch den Manipulator 5 definierte Lücken (nicht dargestellt) ausgebildet werden. Hierzu können beispielsweise vor dem Erfassungsbereich 4 entsprechende Gruppierbänder (nicht dargestellt) angeordnet sein, die durch eine kurzzeitige Beschleunigung einzelne Stückgüter 2, 2a, 2b, 2c oder Stückgutgruppen von den nachlaufenden Stückgütern 2, 2a, 2b, 2c abtrennen.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter zu Gebinden zusammengefasst sind.

Der Manipulator 5 ist zum klemmenden und/oder formschlüssigen und/oder kraftschlüssigen Entgegennehmen von Stückgütern 2, 2a, 2b, 2c innerhalb des Erfassungsbereichs 4 mit zwei gegeneinander zustellbaren Greiferbacken (nicht dargestellt) ausgebildet und ausgestattet. Zur Erklärung der Funktionsweise des Manipulators 5 wird auf die Patentanmeldung mit dem Aktenzeichen DE 10 2016 206 639 verwiesen. Der Manipulator 5 erfasst mindestens ein zuvorderst in den Erfassungsbereich 4 einlaufendes Stückgut 2, 2a, 2b, 2c, trennt dieses von den nachfolgenden Stückgütern 2, 2a, 2b, 2c der jeweiligen Reihe 1, 1a, 1b, 1c ab und überführt das mindestens eine Stückgut 2, 2a, 2b, 2c in eine jeweils gewünschte bzw. im Interesse einer definierten Lagenbildung benötigte Zielposition und/oder -ausrichtung auf der Horizontalfördereinrichtung 6 und gibt das mindestens eine Stückgut 2, 2a, 2b, 2c an dieser Zielposition frei. Während der Manipulator 5 in weiteren Verfahrensschritten weitere Stückgüter 2, 2a, 2b, 2c der Reihen 1, 1a, 1b, 1c abgreift, wird das mindestens eine in die Zielposition und/oder -ausrichtung verbrachte Stückgut 2, 2a, 2b, 2c mit einer Transportgeschwindigkeit v6 auf der Horizontalfördereinrichtung 6 weiter in Transportrichtung TR bewegt. Vorzugsweise entspricht die Transportgeschwindigkeit v6 der Horizontalfördereinrichtung 6 dabei der Transportgeschwindigkeit v3 der Transporteinrichtungen 3a, 3b, so dass der relative Abstand zwischen dem mindestens einen Stückgut 2, 2a, 2b, 2c und den jeweils noch nicht erfassten und manipulierten nachfolgenden Stückgütern 2, 2a, 2b, 2c konstant ist.

Wenn im vorliegenden Fall bzw. generell im Zusammenhang der vorliegenden Beschreibung von einem Manipulator 5 die Rede ist, kann es sich konkret bei dem zur Überführung des mindestens einen Stückgutes 2,2a, 2b, 2c in die Zielposition und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes (auch: des Manipulators 5), der die Stückgüter 2, 2a, 2b, 2c in der gewünschten Weise erfassen, verschieben, positionieren, platzieren, drehen etc. kann, um die jeweiligen Zielpositionen und/oder Zielausrichtungen für die Stückgüter 2, 2a, 2b, 2c anfahren zu können. Ebenso denkbar sind jedoch auch andere geeignete Manipulatorkonfigurationen, bspw. solche mit Portalroboter-Führungen oder ähnlichem. Bevorzugt besteht der Manipulator 5 aus einem Deltakinematik- oder Parallelkinematik-Roboter, da solche Manipulatoren in der Lage sind, hoch dynamische Verschiebebewegungen zu realisieren und damit möglichst schnelle Taktzeiten zu ermöglichen. Weiterhin ist es bevorzugt, dass zumindest ein für die Erfassung des jeweils wenigstens einen Stückgutes 2a, 2b, oder 2c geeigneter bzw. vorgesehener Abschnitt des jeweiligen Manipulators 5 bzw. des jeweiligen Deltakinematik-Roboters um eine in etwa vertikale Achse rotierbar ist, insbesondere um einen Drehwinkel von mindestens 180°, was eine noch schnellere Positionierung der Stückgüter 2a, 2b, oder 2c bzw. von Gruppen mehrerer Stückgüter 2a, 2b, oder 2c ermöglichen kann. Wahlweise kann auch eine Rotierbarkeit um 360° oder mehr sinnvoll sein, was insbesondere ein sog. "Weiterdrehen" des Manipulators 5 nach dem Absetzen der jeweiligen Stückgüter 2a, 2b, oder 2c an ihren Zielpositionen auf der Horizontalfördereinrichtung 6 ermöglichen kann. Hierdurch wird ein Rückdrehen des Greiferkopfes oder Werkzeugkopfes verzichtbar, was nochmals Zeit beim Positionieren einsparen kann. Diese und andere dem Fachmann bekannten Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Die Bewegungen des innerhalb des Gruppiermoduls 20 oberhalb der Horizontalfördereinrichtung 6 angeordneten Manipulators 5 werden insbesondere durch eine Steuerungseinrichtung 15 gesteuert und/oder kontrolliert, wobei sich der Bewegungsablauf des Manipulators 5 insbesondere aus der gewünschten Anordnung der Stückgüter 2, 2a, 2b, 2c gemäß einem gewünschten, herzustellenden Lagenschema 12 ergibt.

Zumindest eine der Transporteinrichtungen 3, 3a, 3b, 3c ist quer zur Transportrichtung TR verschieblich, so dass unterschiedliche Anordnungen der Transporteinrichtungen 3, 3a, 3b, 3c innerhalb der Handhabungsvorrichtung 10 möglich sind. Die schematische Ansicht der Fig. 1 zeigt eine erste Arbeitsanordnung A1, bei der die drei Transporteinrichtungen 3a, 3b, 3c derart angeordnet sind, dass zwischen der einen äußeren Transporteinrichtung 3a und der mittleren Transporteinrichtung 3b ein erster Abstand d1 ausgebildet ist und zwischen der anderen äußeren Transporteinrichtung 3c und der mittleren Transporteinrichtung 3b ein zweiter Abstand d2 ausgebildet ist, der in etwa dem ersten Abstand d1 entspricht. In diesem Fall spricht man insbesondere von einer symmetrischen Zuführung von Stückgütern 2, 2a, 2b, 2c.

Dagegen sind in der in Fig. 2 dargestellten zweiten Arbeitsanordnung A2 die Transporteinrichtungen 3a, 3b direkt aneinandergrenzend angeordnet, während die dritte Transporteinrichtung 3c in einem dritten Abstand d3 zur mittleren Transporteinrichtung 3b angeordnet ist. In diesem Fall spricht man insbesondere von einer asymmetrischen Zuführung von Stückgütern 2, 2a, 2b, 2c. Beispielsweise kann die Handhabungsvorrichtung 10 durch ein Verschieben der mittleren Transporteinrichtung 3b in Richtung der äußeren Transporteinrichtung 3a von der ersten Arbeitsanordnung A1 in die zweite Arbeitsanordnung A2 überführt werden. Der dritte Abstand d3 entspricht dann im Wesentlichen der Summe aus dem ersten Abstand d1 und dem zweiten Abstand d2.

Die Anordnung der zuführenden Transporteinrichtungen 3a, 3b, 3c ist abhängig vom zu erstellenden Lagenschema 12 und insbesondere von den hierzu notwendigen, durch den Manipulator 5 durchzuführenden Verfahrensschritten. Der Manipulator 5 wird insbesondere durch eine Steuerungseinrichtung 15 angesteuert und/oder kontrolliert. Diese steht weiterhin vorzugsweise mit der mindestens einen quer zur Transportrichtung TR verschieblichen Transporteinrichtung 3, 3a, 3b, 3c in elektronischer Verbindung und kann eine entsprechende Anordnung derselben innerhalb der Handhabungsvorrichtung 10 ansteuern und/oder kontrollieren. Beispielsweise kontrolliert die Steuerungseinrichtung 15 die der jeweiligen verschieblichen Transporteinrichtung 3, 3a, 3b, 3c zugeordnete Stellvorrichtung, beispielsweise Stellantrieb, um die mindestens eine Transporteinrichtung 3, 3a, 3b, 3c in gewünschte Weise zu verstellen und/oder anzuordnen.

Auch wenn im Zusammenhang mit den Figuren 1 und 2 nur eine Verstellung der mittleren Transporteinrichtung 3b dargestellt ist, so kann auch zusätzlich eine Verstellung einer oder beider äußerer Transporteinrichtungen 3a, 3c vorteilhaft sein. Insbesondere in der zweiten Arbeitsanordnung A2 gemäß Fig. 2 kann in einem Verfahrensschritt vorgesehen sein, dass der Manipulator jeweils mindestens ein Stückgut 2a, 2b der beiden direkt benachbarten Reihen 1a, 1b abgreift und diese gemeinsam in eine definierte Zielposition und/oder -lage und/oder -ausrichtung auf der Horizontalfördereinrichtung 6 des Gruppiermoduls 20 befördert.

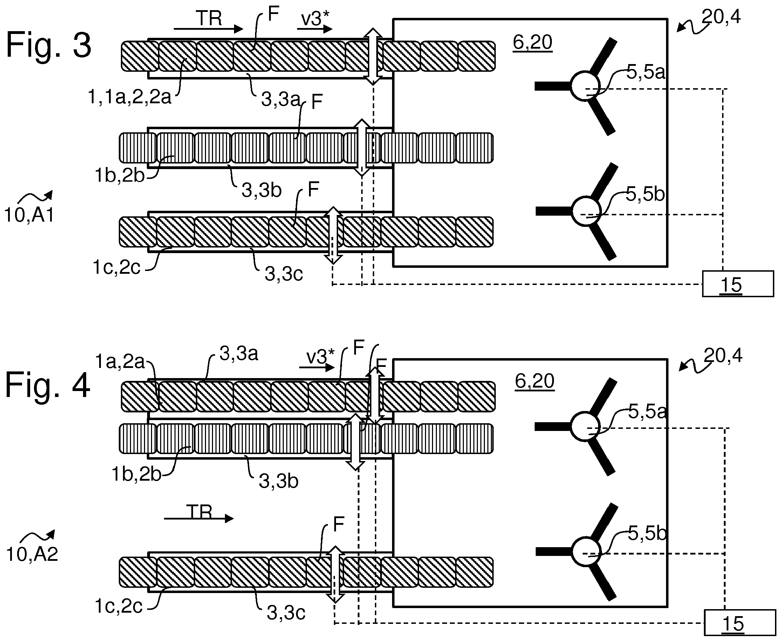

Die Fig. 3 zeigt eine schematische Ansicht einer zweiten Ausführungsform einer Handhabungsvorrichtung 10 in einer ersten Arbeitsanordnung A1, und Fig. 4 zeigt diese zweite Ausführungsform der Handhabungsvorrichtung 10 in einer zweiten Arbeitsanordnung A2. Der Unterschied zu den Figuren 1 und 2 besteht darin, dass hierbei in dem Gruppiermodul 20 zwei Manipulatoren 5a, 5b angeordnet sind, die zusammenarbeiten, um die zugeführten Stückgüter 2a, 2b, 2c gemäß einem gewünschten Lagenschema (nicht dargestellt) abzugreifen und anzuordnen. Dadurch kann ein erhöhter Durchsatz durch das Gruppiermodul 20 erzeugt werden, insbesondere kann vorgesehen sein, dass die Stückgüter 2a, 2b, 2c mit einer Transportgeschwindigkeit v3* zugeführt werden, die größer ist als die Transportgeschwindigkeit v3 bei dem in den Figuren 1 und 2 dargestellten ersten Ausführungsbeispiel.

Für die Verstellbarkeit mindestens einer Transporteinrichtung 3, 3a, 3b, 3c wird auf die Beschreibung zu den Figuren 1 und 2 verwiesen. Sofern mehr als eine Transporteinrichtung 3, 3a, 3b, 3c quer zur Transportrichtung TR verstellbar ist, so ist vorzugsweise vorgesehen, dass die Transporteinrichtungen 3, 3a, 3b, 3c jeweils einzeln und unabhängig voneinander einstellbar sind. Insbesondere ist jeder verstellbaren, insbesondere verschieblichen Transporteinrichtung 3, 3a, 3b, 3c jeweils eine Stellvorrichtung, beispielsweise ein Stellantrieb, zugeordnet. Durch eine entsprechend dem zu erstellenden Lagenschema (vergleiche Figuren 1 und 2) angepasste Anordnung der Transporteinrichtungen 3, 3a, 3b, 3c kann insbesondere bei einer drei- oder mehrbahnigen Zuführung von Stückgütern 2a, 2b, 2c der notwendige Platz zum Abgreifen von Stückgütern 2a, 2b, 2c durch den mindestens einen Manipulator 5 erzeugt werden, insbesondere zum Abgreifen von Stückgütern 2b der mittleren Reihe 1b.

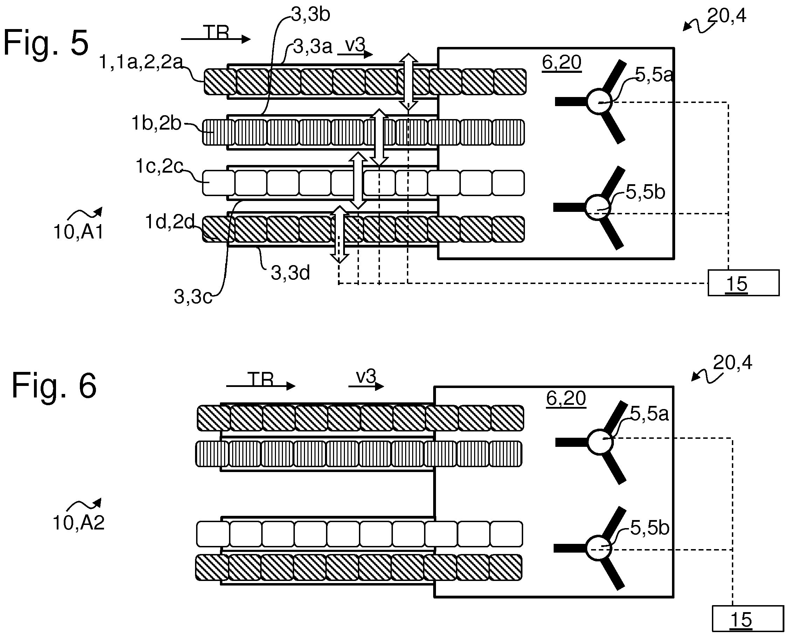

Die Fig. 5 zeigt eine schematische Ansicht einer dritten Ausführungsform einer Handhabungsvorrichtung 10 in einer ersten Arbeitsanordnung A1 und Fig. 6 zeigt diese dritte Ausführungsform der Handhabungsvorrichtung 10 in einer zweiten Arbeitsanordnung A2.

Hierbei erfolgt die Zuführung von Stückgütern 2, 2a, 2b, 2c, 2d in vier parallelen Reihen 1, 1a, 1b, 1c, 1d über vier Transporteinrichtungen 3, 3a, 3b, 3c, 3d zu einem Erfassungsbereich 4 zweier Manipulatoren 5a, 5b. Für die Verstellbarkeit mindestens einer Transporteinrichtung 3, 3a, 3b, 3c, 3c und die Arbeitsweise der Manipulatoren 5a, 5b wird auf die Beschreibung zu den Figuren 1 bis 4 verwiesen.

Auch wenn in den dargestellten Ausführungsbeispielen Transporteinrichtungen 3, 3a, 3b, 3c, 3d dargestellt sind, die jeweils dieselbe Breite der Transportspur senkrecht zur Transportrichtung TR aufweisen und auf denen jeweils eine Stückgutreihe 1, 1a, 1b, 1c, 1d angeordnet ist und transportiert wird, so kann auch vorgesehen sein, Transporteinrichtungen 3 unterschiedlicher Breite zu verwenden, beispielsweise mindestens eine erste Transporteinrichtung 3 mit einer ersten Breite, auf der eine Stückgutreihe 1 angeordnet und befördert werden kann und eine zweite Transporteinrichtung mit einer zweiten Breite, auf der mindestens zwei Stückgutreihen nebeneinander angeordnet und befördert werden können, wobei mindestens eine der unterschiedlichen breiten Transporteinrichtungen quer zur Transportrichtung TR verschieblich ist. Dies ist insbesondere vorteilhaft, wenn in einer Mehrzahl der Verfahrensschritte gemäß dem gewünschten Lagenschema 12 vorteilhaft mindestens zwei Stückgüter von benachbarten Reihen durch den mindestens einen Manipulator 5 gemeinsam erfasst und in eine Zielposition und/oder -ausrichtung verbracht werden sollen.

Weiterhin kann es gemäß einer nicht dargestellten Ausführungsform auch bei einer einbahnigen Zuführung von Stückgütern 2 auf nur einer Transporteinrichtung 3 vorteilhaft sein, diese quer zur Transportrichtung TR verstellbar zu gestalten. Die Transporteinrichtung 3 kann beispielsweise gemäß dem gewünschten Lagenschema 12 derart angeordnet werden, dass zumindest eines der Stückgüter 2 zur Transporteinrichtung 3 fluchtend auf der Horizontalfördereinrichtung 6 weiter transportiert wird und seine Zielposition gemäß dem Lagenschema 12 einnimmt, insbesondere relativ zu den anderen, durch den mindestens einen Manipulator 5 erfassten und manipulierten Stückgütern 2. Das mindestens eine Stückgut 2 muss in diesem Fall nicht durch den Manipulator 5 erfasst und manipuliert werden, so dass die Zahl der vom Manipulator 5 durchzuführenden Verfahrensschritte durch eine geeignete Anordnung der Transporteinrichtung 3 reduziert und somit der Durchsatz erhöht werden kann.

Bei allen hier beschriebenen Ausführungsformen erfolgt die Verstellung der Anordnung der Transporteinrichtungen 3, 3a, 3b, 3c, 3d innerhalb der Handhabungsvorrichtung 10 quer zur Transportrichtung TR insbesondere jeweils vor Beginn der Produktion, beispielsweise bei einer Umstellung auf ein neues Lagenschema 12.

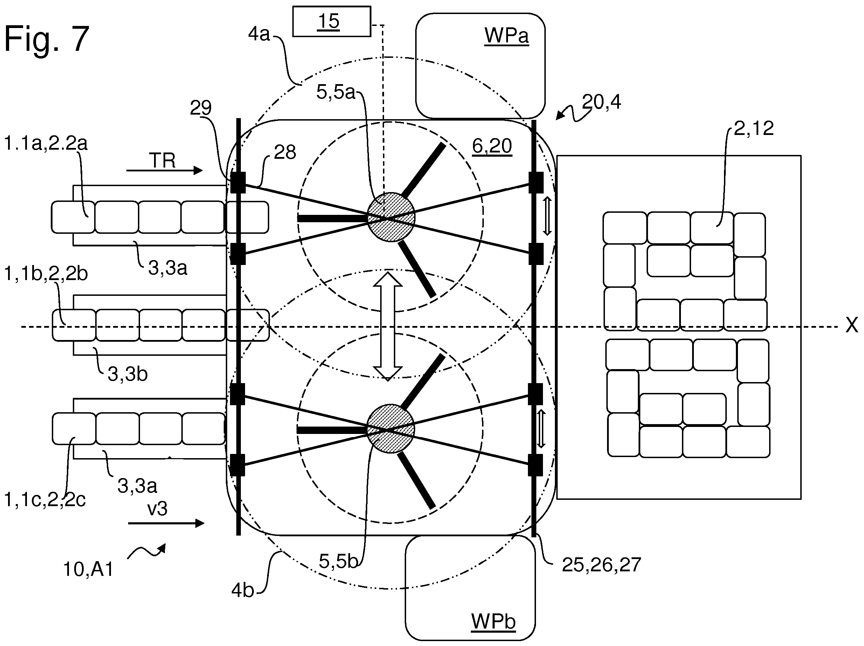

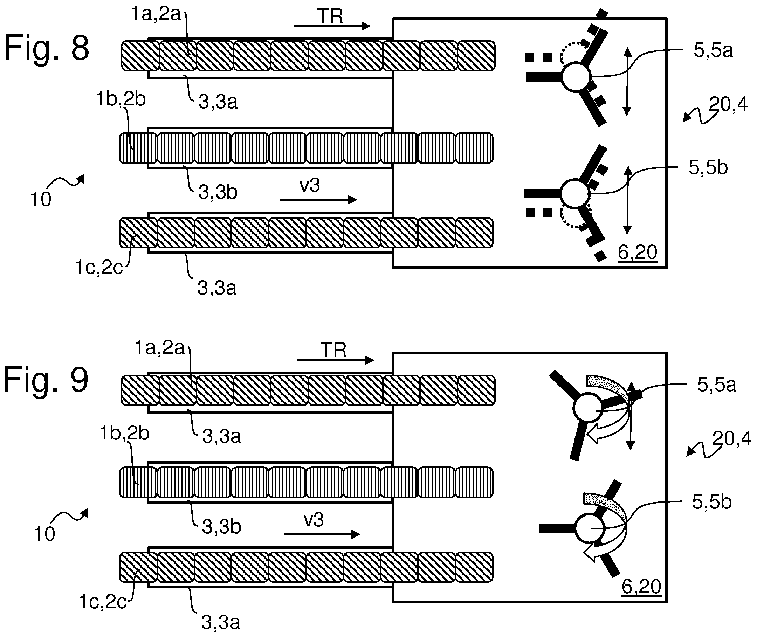

Die Fig. 7 zeigt eine schematische Ansicht einer vierten Ausführungsform einer Handhabungsvorrichtung 10 in einer ersten Arbeitsanordnung A1, bei der analog zu Fig. 3 innerhalb des Gruppiermoduls 20 zwei Manipulatoren 5a und 5b angeordnet sind, die gleichzeitig in drei Reihen 1a, 1b, 1c zugeführte Stückgüter 2a, 2b, 2c abarbeiten und entsprechend einem vorgegebenen Lagenschema auf der Horizontalfördereinrichtung 6 des Gruppiermoduls 20 anordnen können. Zudem zeigen die schematischen Ansichten der Figuren 8 und 9 in ganz schematischer Weise die unterschiedlichen Verstellmöglichkeiten einer Handhabungsvorrichtung 10 gemäß Fig. 7. Zur allgemeinen Beschreibung der Handhabungsvorrichtung 10 wird insbesondere auf die Beschreibung zu den Figuren 1 und 2 verwiesen.

Gerade bei Anordnung von zwei oder mehr Manipulatoren 5a, 5b innerhalb eines Gruppiermoduls 20, die insbesondere überlappende Erfassungsbereiche 4a, 4b aufweisen, kann zusätzlich zu der Verstellbarkeit der zuführenden Transporteinrichtungen 3, 3a, 3b, 3c quer zur Transportrichtung TR eine Verstellbarkeit der Anordnung der Manipulatoren 5a, 5b innerhalb des Gruppiermoduls 20 besonders vorteilhaft Kollisionen der beiden Manipulatoren 5a, 5b innerhalb des Gruppiermoduls 20 vermeiden und somit die Variabilität und Flexibilität des Arbeitsweise des Gruppiermoduls 20 erhöhen. Insbesondere kann jeder der beiden Manipulatoren 5a, 5b senkrecht zur Transportrichtung TR verstellt werden und/oder zusätzlich durch eine Drehung in eine Vorzugs- Ausgangslage und/oder -ausrichtung gebracht werden. Diese Beweglichkeit der Manipulatoren 5a, 5b senkrecht zur Transportrichtung TR bewirkt eine Vergrößerung des Erfassungsbereichs 4a, 4b des jeweiligen Manipulators 5a, 5b.

Die Manipulatoren 5a, 5b sind hierzu innerhalb des Gruppiermoduls 20 oberhalb der Horizontalfördereinrichtung 6 beispielsweise quer zur Transportrichtung TR der zugeführten Stückgüter 2a, 2b und der Horizontalfördereinrichtung 6 schiebebeweglich an mindestens einer Tragekonstruktion 25 angeordnet. Beispielsweise umfasst die Tragekonstruktion 25 zwei senkrecht zur Transportrichtung TR der Horizontalfördereinrichtung 6 angeordnete Rahmenelemente 26, die jeweils als Schlittenführung 27 ausgebildet sind. Zwischen den Rahmenelemente 26 erstrecken sich jeweils zwei überkreuzend angeordnete Rahmenelemente 28, an deren freien Enden jeweils Schlitten 29 angeordnet sind, die innerhalb der Rahmenelemente 26 geführt sind. Die Manipulatoren 5a, 5b sind vorzugsweise jeweils an einem Kreuzungspunkt von zwei Rahmenelemente 28 angeordnet und befestigt. Die Verstellung der Manipulatoren 5a, 5b kann alternativ auch über eine geeignete Spindelverstellung o.ä. erfolgen.

Alternativ und/oder zusätzlich kann vorgesehen sein, dass der mindestens eine Manipulator 5 vor dem Abgreifen von mindestens einem Stückgut 2 durch eine Drehung eine bevorzugte Ausgangslage und/oder -ausrichtung einnimmt, um anschließend beim Abgreifen und Verfahren des mindestens einen Stückgutes 2, 2a, 2b, 2c nur minimale Bewegungsänderungen vornehmen zu müssen.

Die Verstellung der Anordnung der Manipulatoren 5a, 5b innerhalb des Gruppiermoduls 20 kann dabei jeweils vor Beginn der Produktion, beispielsweise bei einer Umstellung auf ein neues Lagenschema 12, erfolgen. Es ist aber auch denkbar, dass die Anordnung der Manipulatoren 5a, 5b auch im laufenden Betrieb eingestellt wird. Dabei erfolgt die Einstellung derart gesteuert, dass die Arme der insbesondere durch Tripoden gebildeten Manipulatoren 5a, 5b nicht miteinander kollidieren. Die Manipulatoren 5a, 5b können beispielsweise symmetrisch verstellt werden, d.h. jeweils gleich auseinander bewegt oder aufeinander zu bewegt werden. Hierbei können die beiden Manipulatoren 5a, 5b mechanisch miteinander gekoppelt sein, so dass für die Verstellung nur ein einziger Antrieb notwendig ist. Alternativ können die Manipulatoren 5a, 5b auch asymmetrisch verstellt werden, wobei beispielsweise beide Manipulatoren 5a, 5b in dieselbe Richtung senkrecht zur Transportrichtung TR verfahren werden. Hierbei können die Manipulatoren 5a, 5b entweder um dieselbe Distanz oder aber um verschiedene Distanzen bewegt werden. Alternativ kann auch einer der Manipulatoren 5a beispielsweise in Transportrichtung TR gesehen in einem ersten Abstand nach rechts bewegt werden und der andere Manipulator 5b in Transportrichtung TR gesehen in einem zweiten geringeren oder größeren Abstand nach links bewegt werden usw. In diesem Fall erfolgt die Verstellung der beiden Manipulatoren 5a, 5b unabhängig voneinander.

Bei der in Fig. 7 dargestellten Anordnung der Manipulatoren 5a, 5b können Stückgüter 2b der mittleren Reihe 1b erst durch einen der Manipulatoren 5a, 5b erfasst werden, wenn die Stückgüter 2b bereits ein ganzes Stück auf der Horizontalfördereinrichtung 6 in Transportrichtung TR innerhalb des Gruppiermoduls 20 bewegt worden sind. Durch eine Verschiebung eines der Manipulatoren 5a, 5b in Richtung einer Mittelachse X des Gruppiermoduls 20 verschiebt sich der Erfassungsbereich 4a, 4b des Manipulators 5a, 5b in Richtung der Mittelachse X, so dass nunmehr auch Stückgüter 2b direkt beim Übertritt auf die Horizontalfördereinrichtung 6 des Gruppiermoduls 20 erfasst und neu positioniert werden können.

Weiterhin kann am Gruppiermodul 20 mindestens eine Wartungsposition WP für die Manipulatoren 5a, 5b vorgesehen sein. Vorzugsweise ist für jeden Manipulator 5a, 5b eine Wartungsposition WPa, WPb vorgesehen. Sollte einer der Manipulatoren, beispielsweise Manipulator 5a, ausfallen, so dass dieser repariert werden muss, kann das Gruppiermodul 20 weiterhin in einem Notbetrieb mit reduzierter Leistung verwendet werden. Der defekte Manipulator 5a wird in die Wartungsposition WPa außerhalb des Erfassungsbereichs 4 verfahren und kann in dieser Wartungsposition WPa repariert oder aus dem Gruppiermodul 20 entnommen und ggfl. ersetzt werden. Die einlaufenden Stückgüter 2a, 2b, 2c werden nunmehr nur noch von dem im Gruppiermodul 20 verbleibenden Manipulator 5b bearbeitet. Hierzu kann es i.d.R. notwendig sein, die Zufuhrgeschwindigkeit v3 der Transporteinrichtungen 3a, 3b, 3c anzupassen, insbesondere zu reduzieren. Weiterhin muss i.d.R. das Programm, nach dem der Manipulator 5b die Stückgüter 2a, 2b, 2c abgreift, um das gewünschte Lagenschema 12 zu erzeugen, geändert werden. Dies erfolgt vorzugsweise über eine Umprogrammierung der Steuerungseinrichtung 15. Weiterhin kann es in dem Notbetrieb ggfl. vorteilhaft sein, nur noch Stückgüter 2a, 2b und/oder 2c über ein oder zwei Transportbänder 1a, 1b und/oder 1c zu dem Gruppiermodul 20 zur Bearbeitung durch den verbleibenden Manipulator 5b zuzuführen.

Die Erfindung wurde unter Bezugnahme auf eine bevorzugte Ausführungsform beschrieben. Es ist jedoch für einen Fachmann vorstellbar, dass Abwandlungen oder Änderungen gemacht werden können, sofern sie
dabei den Schutzbereich der nachstehenden Ansprüche nicht verlassen.

### Bezugszeichenliste

- 1, 1a, 1b, 1c, 1d: Reihe
- 2, 2a, 2b, 2c, 2d: Stückgut
- 3, 3a, 3b, 3c, 3d: Transporteinrichtung
- 4, 4a, 4b: Erfassungsbereich
- 5, 5a, 5b: Manipulator
- 6: Horizontalfördereinrichtung
- 10: Handhabungsvorrichtung
- 12: gewünschtes Lagenschema
- 15: Steuerungseinrichtung
- 20: Gruppiermodul
- 25: Tragekonstruktion
- 26: Rahmenelement
- 27: Schlittenführung
- 28: Rahmenelement
- 29: Schlitten
- A1 / A2: erste / zweite Arbeitsposition
- AP1 / AP2: erste / zweite Arbeitsanordnung
- d1 / d2 / d3: erster / zweiter / dritter Abstand
- F: Formation
- v3, v3*, v6: Transportgeschwindigkeit, Zufuhrgeschwindigkeit
- WP, WPa, WPb: Wartungsposition
- X: Mittelachse

## Patentansprüche

1. Vorrichtung (10) zum Umgang mit in mindestens einer Reihe (1) hintereinander bewegten Stückgütern (2), wobei die Vorrichtung (10) zumindest umfasst:
- mindestens eine Transporteinrichtung (3) über welche unmittelbar aufeinanderfolgende Stückgüter (2) der Reihe (1) ohne Beabstandung unmittelbar aufeinanderfolgend als geschlossene Formation (F) in einen Erfassungsbereich (4) mindestens eines Manipulators (5) der Vorrichtung (10) transportierbar sind, wobei die in geschlossener Formation (F) zugeführten Stückgüter (2) jeweils von der mindestens einen Transporteinrichtung (3) in Transportrichtung (TR) in den Erfassungsbereich (4) des mindestens einen Manipulators (5) gelangen,
wobei die mindestens eine Transporteinrichtung (3) in ihrer Position in einer Richtung mit einer Querkomponente zur Transportrichtung (TR) relativ zum Erfassungsbereich (4) einstellbar ist,
wobei die Vorrichtung zur Querschiebung der Transporteinrichtung (3) ein quer zur Transportrichtung (TR) angeordnetes Schienensystem oder einen anderen geeigneten Mechanismus umfasst,
**dadurch gekennzeichnet, dass**
der mindestens eine Manipulator (5) zur klemmenden und/oder kraft- und/oder formschlüssigen Erfassung jeweils wenigstens eines Stückgutes (2) aus der geschlossenen Formation (F) innerhalb des Erfassungsbereiches (4) sowie zur räumlichen Abtrennung des mindestens einen erfassten Stückgutes (2) von der mindestens einen Reihe (1) und zu ihrer Verbringung in eine jeweilige definierte relative Zielposition (P1, P2) und/oder-ausrichtung gegenüber nachfolgenden Stückgütern (2) vorbereitet und ausgestattet ist.

2. Vorrichtung (10) nach Anspruch 1, die mindestens zwei parallele Transporteinrichtungen (3) zum Bewegen von Stückgütern (2) hintereinander in den Erfassungsbereich (4) des mindestens einen Manipulators (5) umfasst.

3. Vorrichtung (10) nach Anspruch 1 oder 2, bei der die wenigstens eine Transporteinrichtung (3) im laufenden Betrieb oder vorbereitend für einen Positionierungs- und/oder Lagenbildungsbetrieb in ihrer Position relativ zum Erfassungsbereich (4) einstellbar ist.

4. Vorrichtung (10) nach einem der Ansprüche 1 bis 3, bei welcher der mindestens eine Manipulator (5) und mindestens eine fluchtend zur mindestens einen Transporteinrichtung (3) angeordnete Horizontalfördereinrichtung (6) ein Gruppiermodul (20) bilden, innerhalb dessen die Stückgüter (2) zu einer palettierfähigen Lage (12) oder Teillage anordnenbar sind und wobei der mindestens eine Manipulator (5) innerhalb des Gruppiermoduls (20) beweglich angeordnet ist.

5. Vorrichtung (10) nach Anspruch 4, bei welcher der wenigstens eine Manipulator (5) zumindest innerhalb einer der Horizontalfördereinrichtung (6) parallelen, insbesondere horizontalen Ebene bewegbar und/oder verschiebbar ist und/oder bei welcher der wenigstens eine Manipulator (5) zumindest um eine in etwa vertikal zur Transportebene der Stückgüter (2) stehenden, insbesondere vertikalen Drehachse bewegbar und/oder verdrehbar ist.

6. Vorrichtung (10) nach einem der Ansprüche 1 bis 5, bei welcher der mindestens eine Manipulator (5) bzw. bei der die Manipulatoren (5) zur Verdrehung der erfassten Stückgüter (2) beim Verbringen in die definierte relative Zielposition und/oder -ausrichtung vorbereitet und ausgestattet ist/sind, oder wobei der Manipulator (5) oder die Manipulatoren (5) zur fluchtenden Verschiebung der erfassten Stückgüter (2) gegenüber den nachfolgenden Stückgütern (2) in Transportrichtung (TR) vorbereitet und ausgestattet ist/sind, oder wobei der Manipulator (5) oder die Manipulatoren (5) zur Verschiebung der erfassten Stückgüter (2) gegenüber den nachfolgenden Stückgütern (2) mit einem seitlichen Versatz vorbereitet und ausgestattet ist/sind.

7. Vorrichtung (10) nach einem der Ansprüche 1 bis 6, bei welcher der mindestens eine Manipulator (5) oder zumindest einer von mehreren Manipulatoren (5) durch einen Parallelkinematik-Roboter mit einer innerhalb des Erfassungsbereiches (4) beweglichen und drehbaren Greifeinrichtung zur Erfassung und Positionierung von jeweils einem Stückgut (2) oder zur gleichzeitigen Erfassung und Positionierung von zwei oder mehr Stückgütern (2) ausgebildet ist.

8. Verfahren zum Umgang mit in mindestens einer Reihe (1) hintereinander bewegten Stückgütern (2) mit einer Vorrichtung (10) gemäß einem der Ansprüche 1 bis 7, bei dem
- die Stückgüter (2) auf der mindestens einen Transporteinrichtung (3) in den Erfassungsbereich (4) des mindestens einen in einer Transportrichtung (TR) der Stückgüter (2) angeordneten Manipulators (5) bewegt werden,
- wobei die Stückgüter (2) innerhalb einer Reihe (1) ohne Abstände unmittelbar aufeinanderfolgend als geschlossene Formation (F) transportiert werden,
- wonach wenigstens ein transportiertes Stückgut (2) aus der wenigstens einen geschlossenen Formation (F) der mindestens einen Reihe (1) durch den mindestens einen Manipulator (5) klemmend und/oder kraft- und/oder formschlüssig erfasst, von der Reihe (1) räumlich abgetrennt und in eine definierte relative Zielposition und/oder -ausrichtung gegenüber nachfolgenden Stückgütern (2) gebracht wird,
- wobei eine Position der mindestens einen Transporteinrichtung (3) in ihrer Position in einer Richtung mit einer Querkomponente zur Transportrichtung (TR) relativ zum Erfassungsbereich (4) eingestellt wird.

9. Verfahren nach Anspruch 8, bei dem die Stückgüter (2) auf mindestens zwei parallelen Transporteinrichtungen (3) in mindestens zwei parallelen Reihen (1) hintereinander in den Erfassungsbereich (4) mit dem mindestens einen Manipulator (5) bewegt werden, um dort in eine palettierfähige Lage (12) oder Teillage gebracht zu werden, wobei ein Abstand zwischen den mindestens zwei parallelen Transporteinrichtungen (3) variabel eingestellt wird.

10. Verfahren nach einem der Ansprüche 8 bis 9, bei dem die erfassten Stückgüter (2) beim Verbringen in die definierte relative Zielposition und/oder -ausrichtung gedreht werden, oder wobei die erfassten Stückgüter (2) gegenüber den nachfolgenden Stückgütern (2) in Transportrichtung (TR) fluchtend verschoben werden, oder wobei die erfassten Stückgüter (2) gegenüber den nachfolgenden Stückgütern (2) mit einem seitlichen Versatz verschoben werden.

11. Verfahren nach einem der Ansprüche 9 bis 10, bei dem Stückgüter (2) bahnübergreifend abgegriffen werden, insbesondere wobei mindestens zwei Stückguter (2) von direkt benachbarten Reihen (1) gemeinsam erfasst und manipuliert werden.

12. Verfahren nach einem der Ansprüche 9 bis 11, bei welchem dem Erfassungsbereich (4) mindestens zwei Manipulatoren (5) zugeordnet sind, wobei jeder der wenigstens zwei Manipulatoren (5) mindestens einer von zwei oder mehr parallelen Reihen (1) räumlich zugeordnet und/oder innerhalb dieser räumlichen Zuordnung beweglich angeordnet ist.

13. Verfahren nach Anspruch 12, bei dem die wenigstens eine Transporteinrichtung (2) im laufenden Betrieb oder vorbereitend für einen Positionierungs- und/oder Lagenbildungsbetrieb in ihrer Position relativ zum Erfassungsbereich (4) eingestellt wird und/oder wobei der wenigstens eine Manipulator (5) im laufenden Betrieb oder vorbereitend für einen Positionierungs- und/oder Lagenbildungsbetrieb innerhalb eines Gruppiermoduls (20) und/oder in seiner Position relativ zum Gruppiermodul (20) bewegt werden kann.

14. Verfahren nach Anspruch 12 oder 13, bei dem der wenigstens eine Manipulator (5) zumindest innerhalb einer zu einer Transportebene der Stückgüter (2) parallelen, insbesondere horizontalen Ebene bewegt und/oder verschoben werden kann und/oder bei dem der wenigstens eine Manipulator (5) zumindest um eine in etwa vertikal zur Transportebene der Stückgüter (2) stehenden, insbesondere vertikalen Drehachse bewegt und/oder verdreht werden kann.

## Claims

1. An apparatus (10) for handling piece goods (2) being moved one after another in at least one row (1), wherein the apparatus (10) at least comprises:
- at least one transport device (3) via which immediately consecutive piece goods (2) of the row (1) are transportable without spaces immediately consecutive to one another as closed formation (F) into a seizing range (4) of at least one manipulator (5) of the apparatus (10),
wherein the piece goods (2) being supplied in closed formation (F) in each instance reach the seizing range (4) of the at least one manipulator (5) from the at least one transport device (3) in transport direction (TR),
wherein the at least one transport device (3) is adjustable in its position relative to the seizing range (4) in a direction with a component that is transverse to the transport direction (TR),
wherein the apparatus comprises a rail system arranged transversely to the transport direction (TR), or another suitable mechanism, for the transverse pushing of the transport device (3),
**characterised in that**
the at least one manipulator (5) is prepared and equipped to seize in each instance at least one piece good (2) in a clamping and/or force-locking and/or form-locking manner from the closed formation (F) within the seizing range (4), as well as being prepared and equipped for the spatial separation of the at least one seized piece good (2) from the at least one row (1), and for bringing the seized piece good (2) into a particular defined relative target position (P1, P2) and/or target alignment relative to subsequent piece goods (2).

2. The apparatus (10) according to claim 1, which comprises at least two parallel transport devices (3) for moving piece goods (2) one after another into the seizing range (4) of the at least one manipulator (5).

3. The apparatus (10) according to claim 1 or 2, in which the at least one transport device (3) is adjustable in its position relative to the seizing range (4) during ongoing operation or in preparation for a positioning operation and/or layer forming operation.

4. The apparatus (10) according to one of the claims 1 to 3, in which the at least one manipulator (5) and at least one horizontal conveyor (6) arranged in alignment with the at least one transport device (3) form a grouping module (20), within which the piece goods (2) are arrangeable to form a palletisable layer (12) or partial layer, and wherein the at least one manipulator (5) is movably arranged within the grouping module (20).

5. The apparatus (10) according to claim 4, in which the at least one manipulator (5) is movable and/or slidable at least within a plane, in particular within a horizontal plane, which is parallel to the horizontal conveyor (6), and/or in which the at least one manipulator (5) is movable and/or rotatable at least about an axis of rotation, in particular a vertical axis of rotation, which is approximately vertical to the transport plane of the piece goods (2).

6. The apparatus (10) according to one of the claims 1 to 5, in which the at least one manipulator (5) or the manipulators (5) is/are prepared and equipped to rotate the seized piece goods (2) while they are being moved to the defined relative target position and/or target alignment, or wherein the manipulator (5) or the manipulators (5) is/are prepared and equipped to shift the seized piece goods (2) in transport direction (TR) in alignment relative to the subsequent piece goods (2), or wherein the manipulator (5) or the manipulators (5) is/are prepared and equipped to shift the seized piece goods (2) relative to the subsequent piece goods (2) with a lateral offset.

7. The apparatus (10) according to one of the claims 1 to 6, in which the at least one manipulator (5) or at least one of a plurality of manipulators (5) is formed by a parallel kinematic robot with a gripping device which is movable and rotatable within the seizing range (4) for seizing and positioning in each instance one piece good (2) or for simultaneously seizing and positioning two or more piece goods (2).

8. A method for handling piece goods (2) being moved one after another in at least one row (1), with an apparatus (10) according to one of claims 1 to 7, in which
- the piece goods (2) are moved on the at least one transport device (3) into the seizing range (4) of the at least one manipulator (5) arranged in a transport direction (TR) of the piece goods (2),
- wherein the piece goods (2) are transported within a row (1) without spaces immediately consecutive to one another as closed formation (F),
- whereupon at least one transported piece good (2) is seized in a clamping and/or force-locking and/or form-locking manner from the closed formation (F) of the at least one row (1) by the at least one manipulator (5), is spatially separated from the row (1), and is brought into a defined relative target position and/or target alignment relative to subsequent piece goods (2),
- wherein a position of the at least one transport device (3) is adjusted in its position relative to the seizing range (4) in a direction with a component that is transverse to the transport direction (TR).

9. The method according to claim 8, in which the piece goods (2) are moved on at least two parallel transport devices (3) in at least two parallel rows (1) one after another into the seizing range (4) with the at least one manipulator (5) in order to be brought into a palletisable layer (12) or partial layer there, wherein a distance between the at least two parallel transport devices (3) is variably adjusted.

10. The method according to one of the claims 8 to 9, in which the seized piece goods (2) are rotated into the defined relative target position and/or target alignment while being moved, or wherein the seized piece goods (2) are shifted in alignment relative to the subsequent piece goods (2) in transport direction (TR), or wherein the seized piece goods (2) are shifted relative to the subsequent piece goods (2) with a lateral offset.

11. The method according to one of the claims 9 to 10, in which piece goods (2) are seized across lanes, in particular, wherein at least two piece goods (2) from directly adjacent rows (1) are seized and manipulated together.

12. The method according to one of the claims 9 to 11, in which at least two manipulators (5) are assigned to the seizing range (4), wherein each of the at least two manipulators (5) is spatially assigned to at least one of two or more parallel rows (1) and/or is movably arranged within this spatial assignment.

13. The method according to claim 12, in which the at least one transport device (3) is adjusted in its position relative to the seizing range (4) during ongoing operation or in preparation for a positioning operation and/or layer forming operation, and/or wherein the at least one manipulator (5) can be moved within a grouping module (20) and/or in its position relative to the grouping module (20) during ongoing operation or in preparation for a positioning operation and/or layer forming operation.

14. The method according to claim 12 or 13, in which the at least one manipulator (5) can be moved and/or shifted at least within a plane, in particular within a horizontal plane, which is parallel to a transport plane of the piece goods (2), and/or in which the at least one manipulator (5) can be moved and/or rotated at least about an axis of rotation, in particular a vertical axis of rotation, which is approximately vertical to the transport plane of the piece goods (2).

## Revendications

1. Dispositif (10) de manipulation de produits de détail (2) déplacés les uns derrière les autres en au moins une rangée (1), dans lequel le dispositif (10) comprend au moins:
- au moins un dispositif de transport (3) par l'intermédiaire duquel des produits de détail (2) immédiatement successifs de la rangée (1) peuvent être transportés sans espacement, en tant que formation fermée (F), dans une zone de saisie (4) d'au moins un manipulateur (5) du dispositif (10),
dans lequel les produits de détail (2) amenés en formation fermée (F) atteignent chacune, à partir dudit au moins un dispositif de transport (3) dans la direction de transport (TR), la zone de saisie (4) dudit au moins un manipulateur (5),
dans lequel la position dudit au moins un dispositif de transport (3) peut être ajustée dans une direction ayant une composante transversale à la direction de transport (TR) par rapport à la zone de saisie (4),
dans lequel, pour pousser transversalement le dispositif de transport (3), le dispositif comprend un système de rails disposé transversalement à la direction de transport (TR) ou un autre mécanisme approprié,
**caractérisé par le fait que**
ledit au moins un manipulateur (5) est préparé et équipé pour saisir par serrage et/ou par adhérence et/ou à engagement positif respectivement au moins un produit de détail (2) de la formation fermée (F) à l'intérieur de la zone de saisie (4) ainsi que pour séparer spatialement ledit au moins un produit de détail (2) saisi de ladite au moins une rangée (1) et pour amener celui-ci dans une position cible (P1, P2) et/ou orientation cible relative(s) définie(s) respective(s) par rapport à des produits de détail (2) suivants.

2. Dispositif (10) selon la revendication 1, qui comprend au moins deux dispositifs de transport parallèles (3) pour déplacer des produits de détail (2) les uns derrière les autres dans la zone de saisie (4) dudit au moins un manipulateur (5).

3. Dispositif (10) selon la revendication 1 ou 2, dans lequel ledit au moins un dispositif de transport (3) est réglable dans sa position par rapport à la zone de saisie (4), en cours de fonctionnement ou en préparation, pour un service de positionnement et/ou de formation de couches.

4. Dispositif (10) selon l'une quelconque des revendications 1 à 3, dans lequel ledit au moins un manipulateur (5) et au moins un dispositif de transport horizontal (6) disposé dans l'alignement dudit au moins un dispositif de transport (3) forment un module de groupement (20) à l'intérieur duquel les produits de détail (2) peuvent être disposés pour former une couche palettisable (12) ou une couche partielle, et dans lequel ledit au moins un manipulateur (5) est disposé de manière mobile à l'intérieur du module de groupement (20).

5. Dispositif (10) selon la revendication 4, dans lequel ledit au moins un manipulateur (5) peut être mû et/ou déplacé au moins dans un plan parallèle, en particulier horizontal, au dispositif de transport horizontal (6) et/ou dans lequel ledit au moins un manipulateur (5) peut être déplacé et/ou tourné au moins autour d'un axe de rotation qui est à peu près vertical par rapport au plan de transport des produits de détail (2), en particulier d'un axe de rotation vertical.

6. Dispositif (10) selon l'une quelconque des revendications 1 à 5, dans lequel ledit au moins un manipulateur (5) ou bien dans lequel les manipulateurs (5) est/sont préparé(s) et équipé(s) pour faire tourner les produits de détail (2) saisis lorsqu'ils sont déplacés dans la position et/ou orientation cible(s) relative(s) définie(s), ou dans lequel le manipulateur (5) ou les manipulateurs (5) est/sont préparé(s) et équipé(s) pour déplacer en alignement, dans la direction de transport (TR), les produits de détail (2) saisis par rapport aux produits de détail (2) suivants, ou dans lequel le manipulateur (5) ou les manipulateurs (5) est/sont préparé(s) et équipé(s) pour déplacer les produits de détail (2) saisis avec un décalage latéral par rapport aux produits de détail (2) suivants.

7. Dispositif (10) selon l'une quelconque des revendications 1 à 6, dans lequel ledit au moins un manipulateur (5) ou au moins un parmi plusieurs manipulateurs (5) est formé par un robot à cinématique parallèle comprenant un dispositif de préhension mobile et rotatif à l'intérieur de la zone de saisie (4), qui est destiné à saisir et à positionner respectivement un produit de détail (2) ou à saisir et à positionner en même temps deux produits de détail (2) ou plus.

8. Procédé de manipulation de produits de détail (2) déplacés les uns derrière les autres en au moins une rangée (1), au moyen d'un dispositif (10) selon l'une quelconque des revendications 1 à 7, dans lequel
- les produits de détail (2) sont déplacés sur ledit au moins un dispositif de transport (3) dans la zone de saisie (4) dudit au moins un manipulateur (5) disposé dans une direction de transport (TR) des produits de détail (2),
- dans lequel les produits de détail (2) à l'intérieur d'une rangée (1) sont transportés en tant que formation fermée (F), sans intervalles en se suivant directement,
- ce après quoi au moins un produit de détail (2) transporté est saisi par serrage et/ou par adhérence et/ou à engagement positif, par ledit au moins un manipulateur (5), dans ladite au moins une formation fermée (F) de ladite au moins une rangée (1), est séparé spatialement de la rangée (1) et est amené dans une position cible et/ou orientation cible relative(s) définie(s) par rapport à des produits de détail (2) suivants,
- dans lequel une position dudit au moins un dispositif de transport (3) est ajustée dans sa position dans une direction ayant une composante transversale à la direction de transport (TR) par rapport à la zone de saisie (4).

9. Procédé selon la revendication 8, dans lequel les produits de détail (2) sont déplacés les uns derrière les autres, par ledit au moins un manipulateur (5), sur au moins deux dispositifs de transport (3) parallèles, en au moins deux rangées parallèles (1), dans la zone de saisie (4) pour y être amenés dans une couche palettisable (12) ou une couche partielle, dans lequel une distance entre lesdits au moins deux dispositifs de transport (3) parallèles est réglée de manière variable.

10. Procédé selon l'une quelconque des revendications 8 à 9, dans lequel les produits de détail (2) saisis sont tournés lorsqu'ils sont amenés dans la position cible et/ou l'orientation cible relative(s) définie(s), ou dans lequel les produits de détail (2) saisis sont déplacés en alignement par rapport aux produits de détail (2) suivants dans la direction de transport (TR), ou dans lequel les produits de détail (2) saisis sont déplacés avec un décalage latéral par rapport aux produits de détail (2) suivants.

11. Procédé selon l'une quelconque des revendications 9 à 10, dans lequel des produits de détail (2) sont saisis à travers des voies, en particulier dans lequel au moins deux produits de détail (2) provenant de rangées (1) directement adjacentes sont saisis et manipulés ensemble.

12. Procédé selon l'une quelconque des revendications 9 à 11, dans lequel au moins deux manipulateurs (5) sont associés à la zone de saisie (4), dans lequel chacun desdits au moins deux manipulateurs (5) est associé spatialement à au moins l'une de deux rangées parallèles (1) ou plus et/ou est disposé de manière mobile à l'intérieur de cette association spatiale.

13. Procédé selon la revendication 12, dans lequel ledit au moins un dispositif de transport (3) est réglé dans sa position par rapport à la zone de saisie (4), en cours de fonctionnement ou en préparation, pour un service de positionnement et/ou de formation de couches, et/ou dans lequel ledit au moins un manipulateur (5) peut être déplacé en cours de fonctionnement ou en préparation pour un service de positionnement et/ou de formation de couches au sein d'un module de groupement (20) et/ou dans sa position par rapport au module de groupement (20).

14. Procédé selon la revendication 12 ou 13, dans lequel ledit au moins un manipulateur (5) peut être mû et/ou déplacé au moins dans un plan parallèle, en particulier horizontal, à un plan de transport des produits de détail (2), et/ou dans lequel ledit au moins un manipulateur (5) peut être déplacé et/ou tourné au moins autour d'un axe de rotation qui est à peu près vertical par rapport au plan de transport des produits de détail (2), en particulier d'un axe de rotation vertical.
